# EUROPEAN PATENT SPECIFICATION

(11) **EP 3 828 066 B1**
(45) Date of publication and mention of the grant of the patent: **15.06.2022**
(21) Application number: 18935937.5
(22) Date of filing: 28.09.2018
(51) Int. Cl.: B62J 27/20, B62J 11/00, B60R 21/20

(54) **AIRBAG DEVICE FOR SADDLE-TYPE VEHICLE**
AIRBAGVORRICHTUNG FÜR SATTELFAHRZEUG
DISPOSITIF DE COUSSIN DE SÉCURITÉ GONFLABLE POUR VÉHICULE DE TYPE À SELLE

(43) Date of publication of application: 02.06.2021
(73) Proprietor: HONDA MOTOR CO., LTD., Minato-ku Tokyo 107-8556 (JP)
(72) Inventor: KOBAYASHI, Yuki, Wako-shi, Saitama 351-0193 (JP); MIYAKAWA, Futoshi, Wako-shi, Saitama 351-0193 (JP)
(74) Representative: Herzog, Markus
(86) International application number: PCT/JP2018/036362
(87) International publication number: WO 2020/065939

(56) References cited:
- EP-A1- 1 338 479
- EP-A1- 1 634 803
- WO-A1-2017/208992
- WO-A1-2017/208992
- JP-A- 2003 237 662
- JP-A- 2005 153 613
- JP-A- 2007 269 048
- JP-A- 2010 155 521
- JP-A- 2011 073 558
- US-A1- 2003 218 320

## Description

### [Technical Field]

The present invention relates to a saddle-type vehicle comprising an airbag device.

### [Background Art]

In the related art, an airbag device for a saddle-type vehicle including a vehicle body cover forming a straddled space by covering a rear surface of a head pipe and being disposed on a front side of a seat in which a passenger is seated and a retainer provided in the straddled space and accommodating an airbag is known (see Patent Literature 1, for example).

In the aforementioned airbag device, the retainer is provided to be inclined obliquely upward on the rear side along the vehicle body cover, and the airbag expands in a direction inclined forward with respect to a center line along the inclination of the retainer in a side view.

JP 2005 153613 A shows a saddle-type vehicle comprising an airbag device that includes: an inflator; an airbag configured to expand by gas discharged from the inflator; and a retainer accommodating the airbag, wherein the retainer is disposed behind a head pipe, characterized in that the retainer is coupled to a first extending portion extending backward from a steering shaft turnably supported by the head pipe and a second extending portion extending backward from the steering shaft, and the retainer moves to left or right in response to steering of a handle, the first extending portion has one end secured to the steering shaft and the other end coupled to the retainer in a swingable manner.

Said document discloses the features of the preamble of claim 1.

### [Citation List]

### [Patent Literature]

[Patent Literature 1]
Japanese Patent Laid-Open No. 2015-145151

### [Summary of Invention]

### [Technical Problem]

According to Patent Literature 1, since the upper deployment of the airbag is performed at the same position regardless of whether or not the handle is steered, there may be a case in which the posture of a passenger changes when the vehicle is turning due to steering of a handle and the deployment position of the airbag deviates to the left or right with respect to the passenger.

An object of the present invention is to provide an airbag device for a saddle-type vehicle capable of causing an airbag to be deployed such that the airbag faces a passenger in response to steering of a handle.

### [Solution to Problem]

In order to solve the aforementioned problem, an aspect of the present invention provides a saddle-type vehicle comprising an airbag device according to claim 1.

The airbag device includes: an inflator (53); an airbag (52) configured to expand by gas discharged from the inflator (53); and a retainer (51, 91) accommodating the airbag (52), in which the retainer (51, 91) is disposed behind a head pipe (14), and the retainer (51, 91) is coupled to a first extending portion (68, 88) extending backward from a steering shaft (20) turnably supported by the head pipe (14) and a second extending portion (69, 89) extending backward from the head pipe (14) or the steering shaft (20), and the retainer (51, 91) moves to left or right in response to steering of a handle (23).

In the present invention, the first extending portion (68) has one end secured to the steering shaft (20) and the other end coupled to the retainer (51) in a swingable manner, and the second extending portion (69) includes a link member (71) that has one end coupled to a side of the head pipe (14) in a swingable manner and the other end coupled to the retainer (51) in a swingable manner.

Also, in the aspect of the present invention, a pair of link members (71) may be provided.

Also, in the aspect of the present invention, the link members (71) may be a pair of parallel links.

### [Advantageous Effects of Invention]

According to the present invention, since the retainer is disposed behind the head pipe, the retainer is coupled to the first extending portion extending backward from the steering shaft turnably supported by the head pipe and the second extending portion extending backward from the head pipe or the steering shaft, and the retainer moves to the left or right in response to steering of the handle, it is possible to move the retainer to the left or right in response to the steering of the handle and to deploy the airbag such that the airbag faces a passenger when the airbag is deployed upward.

According to the present invention, since the first extending portion has the one end secured to the steering shaft and the other end coupled to the retainer in a swingable manner, and the second extending portion includes the link member that has one end coupled to the side of the head pipe in a swingable manner and the other end coupled to the retainer in a swingable manner, it is possible to dispose the first extending portion and the second extending portion to be close to an axial direction of the steering shaft and thereby to compactly form an airbag device.

Also, in the aspect of the present invention, since the pair of link members are provided, it is possible to fixedly support the retainer with the first extending portion and the pair of link members of the second extending portion.

Also, in the aspect of the present invention, since the link members are a pair of parallel links, it is possible to move the retainer to the left or right in parallel in response to steering of the handle and to deploy the airbag such that the airbag faces the passenger when the airbag is deployed upward.

### [Brief Description of Drawings]

Figure 1 is a left side view of a motorcycle including an airbag device according to a first embodiment of the present invention.
Figure 2 is a sectional view of a center of a vehicle body front portion in a vehicle width direction cut in a front-back direction (first embodiment).
Figure 3 is a back view illustrating disposition and a structure of the airbag device (first embodiment).
Figure 4 is a sectional view illustrating the disposition and the structure of the airbag device (first embodiment).
Figure 5 is a first action diagram illustrating actions of the airbag device (first embodiment).
Figure 6 is a second action diagram illustrating actions of the airbag device (first embodiment).
Figure 7 is a sectional view of a center of a vehicle body front portion of a motorcycle in a vehicle width direction cut in a front-back direction according to a not claimed second embodiment.
Figure 8 is a back view illustrating disposition and a structure of an airbag device (second embodiment).
Figure 9 is a left side view illustrating the disposition and the structure of the airbag device (second embodiment).
Figure 10 is a first action diagram illustrating actions of the airbag device (second embodiment).
Figure 11 is a second action diagram illustrating actions of the airbag device (second embodiment).

### [Description of Embodiment]

Hereinafter, each embodiment of the present invention will be described with reference to drawings. Note that description of directions such as front, back, left, right, upper, and lower in the explanation are assumed to be the same as directions with respect to a
vehicle body unless particularly indicated otherwise. Also, the reference sign FR illustrated in each drawing represents the front side of the vehicle body, the reference sign UP represents the upper side of the vehicle body, and the reference sign LH represents the left side of the vehicle body.

### <First embodiment>

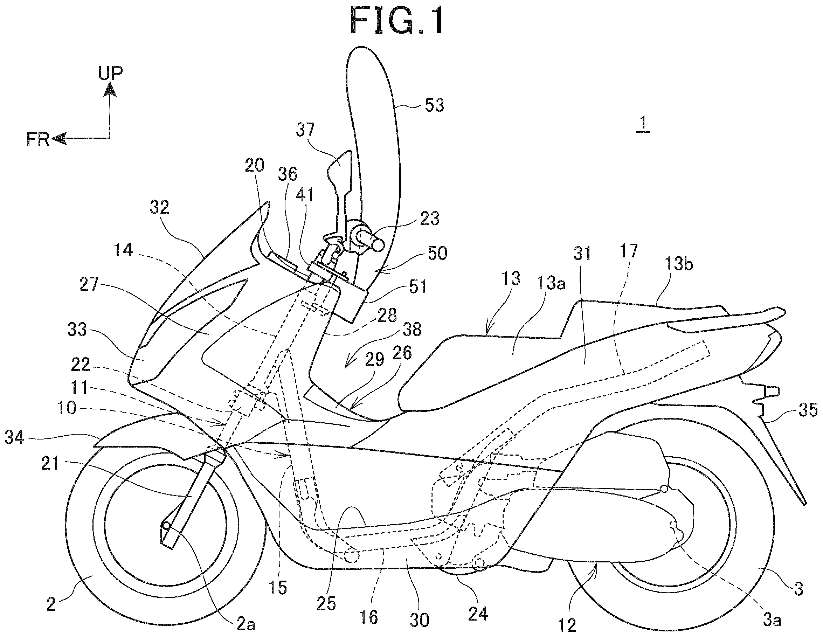

Figure 1 is a left side view illustrating a motorcycle 1 including an airbag device 50 according to a first embodiment of the present invention.

Figure 1 illustrates a state in which an airbag 52 as will be described later in detail has expanded and has been deployed vertically upward.

The motorcycle 1 includes a vehicle body frame 10 that serves as a skeleton, a front wheel 2 supported at a front end portion of the vehicle body frame 10 via a front fork 11, and a rear wheel 3 supported at a rear end of the vehicle body frame 10 via a power unit 12. The motorcycle 1 is a saddle-type vehicle of a scooter type including a seat 13 configured such that a passenger is seated therein in a straddling manner.

The vehicle body frame 10 includes a head pipe 14, a main frame 15, a pair of left and right lower frames 16, and a pair of left and right rear frames 17.

The head pipe 14 is provided at a front end of the vehicle body frame 10 and is disposed at the center of the vehicle width similarly to the front wheel 2. The main frame 15 extends downward on the rear side from the head pipe 14. Each of the pair of left and right lower frames 16 extends backward from a lower end portion of the main frame 15. Each of the left and right rear frames 17 extends backward to be inclined upward on the rear side from each of the left and right lower frames 16.

The front fork 11 includes a steering shaft 20, a pair of left and right fork pipes 21, and a bridge member 22.

The steering shaft 20 is turnably supported by the head pipe 14, and a handle 23 is disposed on the side of an upper end of the steering shaft 20. The left and right fork pipes 21 are disposed on both left and right sides of the front wheel 2 and support the front wheel 2 via an axle 2a. The bridge member 22 is secured to a lower end of the steering shaft 20 and couples upper portions of the left and right fork pipes 21.

In a side view of the vehicle, the head pipe 14 is inclined backward with respect to the vertical direction by an amount corresponding to a predetermined caster angle set in the motorcycle 1. The steering shaft 20 is inserted into and supported by the head pipe 14 and is disposed to be inclined backward in a side view of the vehicle.

The power unit 12 includes functions of an engine that serves as a drive source for the rear wheel 3 and a swinging arm that supports the rear wheel 3. The power unit 12 is supported by the vehicle body frame 10 in a swingable manner via a link member 24 provided at the front end portion and supports the rear wheel 3 via an axle 3a provided at a rear end portion.

The seat 13 is provided above the rear frame 17. The seat 13 integrally includes a front-side seat 13a in which a driver is seated and a rear-side seat 13b in which a fellow passenger is seated.

A pair of left and right step floors 25 on which the driver places his/her feet are provided on the front lower side of the front-side seat 13a.

The motorcycle 1 includes a vehicle body cover 26 covering the vehicle body such as the vehicle body frame 10.

The vehicle body cover 26 includes a front cover 27, an inner cover 28, a center cover 29, an under cover 30, and a pair of left and right rear-side cover 31.

The front cover 27 covers the head pipe 14 and the upper portion of the front fork 11 from the front side and the left and right sides. The inner cover 28 is continuous with a rear edge of the front cover 27 and covers the head pipe 14 and the upper portion of the front fork 11 from the rear side. The center cover 29 is located on the front lower side of the front-side seat 13a. The under cover 30 overs the vehicle body from the lower side below the left and right step floors 25. The left and right rear-side covers 31 cover the left and right rear frames 17 from sides below the seat 13.

In a side view of the vehicle, a wind screen 32 inclined upward on the rear side is attached to an upper portion of the front cover 27. The headlight 33 is provided on the front surface of the front cover 27.

The front wheel 2 is covered with a front fender 34 from the upper side, and the rear wheel 3 is covered with a rear fender 35 from the upper side.

A meter 36 that displays information related to the motorcycle 1 such as a vehicle speed is disposed in front of the handle 23. A rear-view mirror 37 is attached to the handle 23.

The front portion of the center cover 29 is continuous with the lower portion of the inner cover 28. The center cover 29 is located on the inner side of left and right leg portions of the driver stretched from the front-side seat 13a to the left and right step floors 25.

In a side view of the vehicle, a straddled space 38 recessed downward is formed by the inner cover 28, the center cover 29, and the front surface of the front-side seat 13a. The passenger (driver) can straddle the motorcycle 1 via the straddled space 38 when the passenger gets on and off the motorcycle 1.

The motorcycle 1 includes the airbag device 50 configured to protect the passenger from external impact. The airbag device 50 is disposed in the surroundings of the front fork 11, the handle 23, and the head pipe 14.

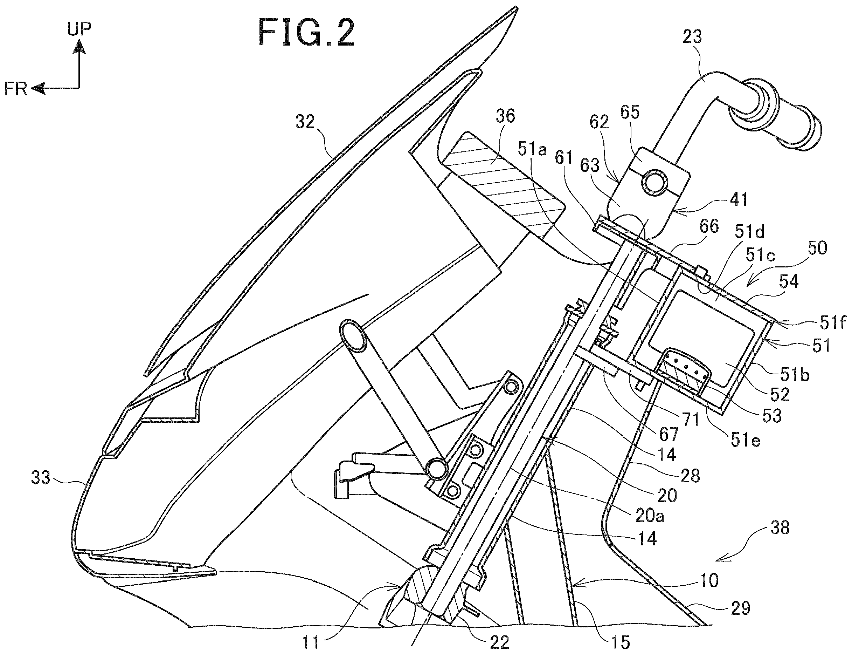

Figure 2 is a sectional view of a center of a vehicle body front portion in the vehicle width direction cut in the front-back direction (first embodiment).

A handle holder 41 is provided at an upper end portion of the steering shaft 20.

The handle holder 41 is formed from a base member 61 attached to the upper end of the steering shaft 20 and a holder body 62 supported by a base member 61.

The holder body 62 includes a pair of left and right lower holders 63 provided at the base members 61 and a pair of left and right upper holders 65, each of which is fastened to each of the upper portions of the left and right lower holders 63 with a pair of bolts (not illustrated). The handle 23 is sandwiched and secured between the left and right lower holders 63 and the left and right upper holders 65.

An extending member 66 extending backward (specifically, obliquely downward on the rear side) is secured to the base member 61. A bracket 67 extending backward (specifically, obliquely downward on the rear side) is secured to the head pipe 14, and a pair of left and right link members 71 is supported at the rear portion of the bracket 67 in a swingable manner on the left and right sides. The left and right link members 71 extend backward (specifically, obliquely downward on the rear side) from the bracket 67.

A box-shaped retainer 51 configuring the airbag device 50 is coupled to the rear end portion of the extending member 66 and the rear end portions of the left and right link members 71 in a swingable manner on the left and right sides.

The retainer 51 is disposed behind the head pipe 14 and the steering shaft 20.

The airbag device 50 includes the retainer 51 and the airbag 52 and an inflator 53 disposed inside the retainer 51.

The retainer 51 is made of metal and includes a front wall 51a, a rear wall 51b, a pair of left and right side walls 51c, an upper wall 51d, and a bottom wall 51e, and a cap member 54 is attached to the upper portion thereof.

The cap member 54 blocks an opening 51f formed by the rear wall 51b, the left and right side walls 51c, and the upper wall 51d of the retainer 51.

The airbag 52 is attached to the inflator 53 and is accommodated in a folded state in the retainer 51. When an impact is applied to the vehicle body, the airbag 52 pushes and opens the cap member 54 using gas discharged from the inflator 53 and expands to the front side of the passenger (driver) as illustrated in Figure 1.

The inflator 53 is provided at the bottom wall 51e of the retainer 51. If an acceleration sensor provided in the vehicle body detects the impact applied to the vehicle body, and in a case in which the impact value is equal to or greater than a predetermined value, a control unit (not illustrated) outputs an ignition signal to the inflator and causes the inflator to discharge the gas. As a result, the airbag is deployed due to the discharged gas.

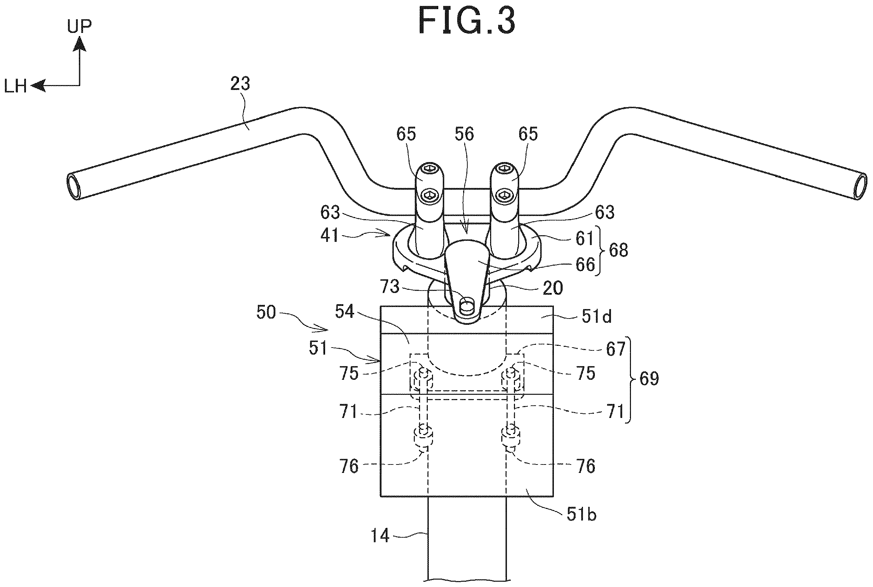

Figure 3 is a back view illustrating disposition and a structure of the airbag device 50.

The airbag device 50 includes a retainer support portion 56 that supports the retainer 51.

The retainer support portion 56 includes the base member 61, the extending member 66, the bracket 67, and the pair of left and right link members 71. The base member 61 and the extending member 66 configure an upper backward extending portion 68. Also, the bracket 67 and the pair of left and right link members 71 configure a lower backward extending portion 69. The upper backward extending portion 68 and the lower backward extending portion 69 are included in the airbag device 50.

The extending member 66 has a plate shape, the front end portion thereof is secured to the handle holder 41 (specifically, the base member 61) such that the front end portion extends backward, and the rear end portion thereof is coupled to an upper coupling pin 73 projecting from the upper wall 51d of the retainer 51 in a swingable manner. The upper coupling pin 73 is located at the center of the upper wall 51d of the retainer 51 in the vehicle width direction and is secured to the upper wall 51d such that the upper coupling pin 73 projects upward.

The bracket 67 has a plate shape and is secured to the rear portion of the head pipe 14.

Each of the left and right link members 71 is formed straight.

Each of the left and right link members 71 has a front end portion coupled to a pair of left and right front coupling pins 75 projecting from the bracket 67 in a swingable manner and a rear end portion coupled to a pair of left and right rear coupling pins 76 projecting from the bottom wall 51e (see Figure 2) of the retainer 51 in a swingable manner.

The left and right link members 71 extend in the vehicle front-back direction when the handle 23 is at a position at the time of going straight and are disposed to be parallel to each other. In other words, the left and right link members 71 are parallel links. Therefore, inclination of the retainer 51 on the left and right sides is always constantly maintained. For example, the rear wall 51b of the retainer 51 faces the rear side of the vehicle at the time of going straight and also faces the vehicle rear side even at the time of steering the handle 23 to the left or right.

The retainer 51 moves to the left or right with the steering of the handle 23 when the handle 23 is steered to the left or right by the retainer support portion 56 having the aforementioned structure.

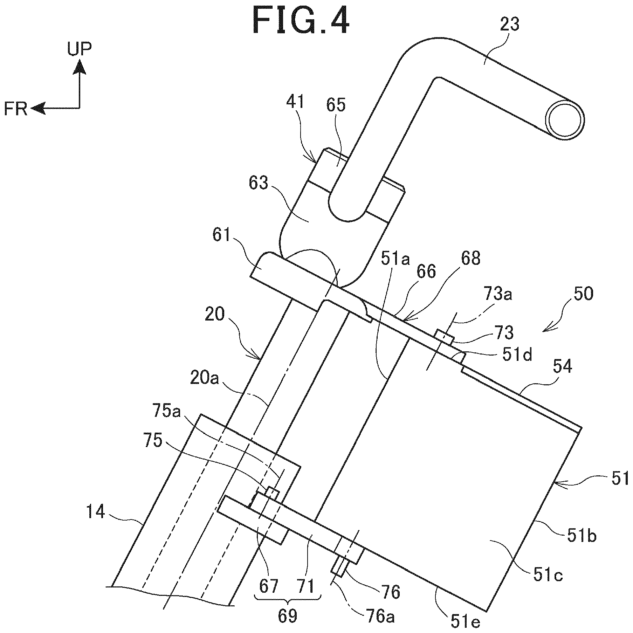

Figure 4 is a left side view illustrating the disposition and the structure of the airbag device 50.

In a side view of the vehicle, the base member 61, the extending member 66, the bracket 67, and the left and right link members 71 are disposed at a right angle or an angle close to the right angle with respect to an axial line 20a of the steering shaft 20.

Also, each of axial lines 73a, 75a, and 76a of the upper coupling pin 73, the front coupling pin 75, and the rear coupling pin 76 is parallel to the axial line 20a of the steering shaft 20.

Note that the extending member 66 may be secured directly to the steering shaft 20.

The retainer 51 is sandwiched between the extending member 66 and the left and right link members 71 on the upper and lower sides. In this manner, it is possible to cause the retainer 51 to swing with no rattling with respect to the extending member 66 and the left and right link members 71. Note that spacers that smooth the swinging may be disposed between the retainer 51 and the extending member 66 and between the retainer 51 and the left and right link members 71.

It is possible to cause the extending member 66 and the left and right link members 71 to be located in proximity in accordance with the height of the retainer 51 in the direction in which the axial line 20a extends, by coupling the retainer 51 to the extending member 66 and the left and right link members 71 as described above. In this manner, it is possible to compactly form the airbag device 50.

Also, it is possible to enhance rigidity by supporting the lower side of the retainer 51 by the bracket 67 and the left and right link members 71. It is thus possible to receive a downward reaction force generated when the airbag 52 (see Figure 1) is deployed.

In addition, the extending member 66 and the left and right link members 71 extend backward from the side of the steering shaft 20 and the side of the head pipe 14, respectively. It is thus possible to cause the retainer 51 to be located closer to the driver and make it easy to receive the driver with the airbag 52 when the airbag 52 is deployed.

Actions of the airbag device 50 described above will be described below.

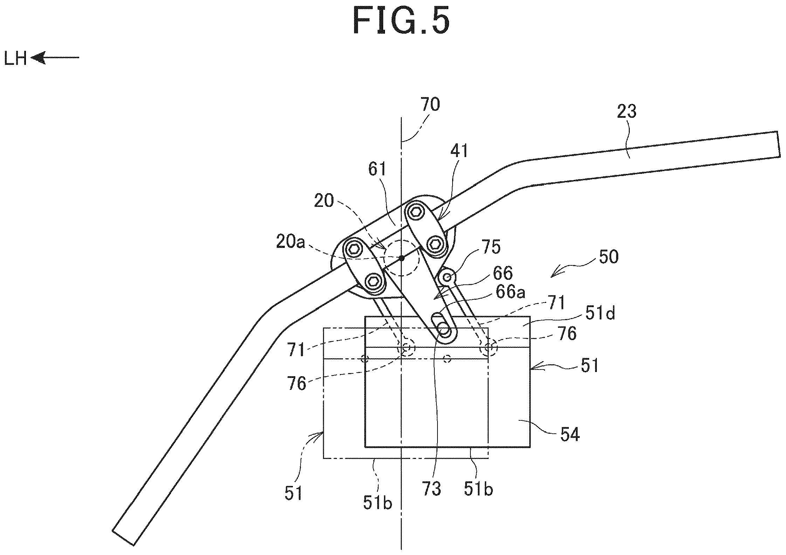

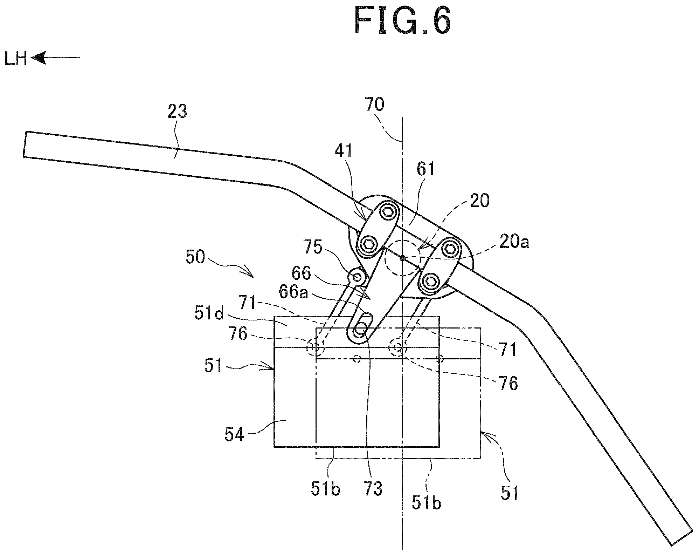

Figure 5 is a first action diagram illustrating actions of the airbag device 50, and Figure 6 is a second action diagram illustrating actions of the airbag device 50.

Figures 5 and 6 illustrate a state when seen from an upper side in the axial direction of the steering shaft 20. The reference sign 70 denotes a vehicle body center line extending in the vehicle front-back direction through the axial line 20a of the steering shaft 20.

As illustrated in Figure 5, if the handle 23 is turned left from the state at the time of going straight, then the extending member 66 swings from a state in which the extending member 66 extends backward with respect to the base member 61 to a state in which the extending member 66 extends obliquely sideward on the rear side (specifically, obliquely rightward on the rear side). As a result, the retainer 51 including the upper coupling pin 73 inserted into a long hole 66a formed at the rear end portion of the extending member 66 moves while swinging sideward (rightward). At this time, since the retainer 51 is coupled to the side of the head pipe 14 (see Figure 4) (specifically, the bracket 67 (see Figure 4)) with the left and right parallel link members 71, the retainer 51 moves without changing the inclination to the left or right from the position when the vehicle goes straight as illustrated by the two-dotted chain line. For example, the rear wall 51b always moves in a state in which the rear wall 51b extends in the vehicle width direction.

The aforementioned long hole 66a absorbs positional deviation of the upper coupling pin 73 with respect to the extending member 66, which is caused during the swinging due to differences in entire lengths and swinging center positions of the extending member 66 and the link member 71.

As illustrated in Figure 6, if the handle 23 is turned right from the state at the time of going straight, then the extending member 66 swings from a state in which the extending member 66 extends backward with respect to the base member 61 to a state in which the extending member 66 extends obliquely sideward on the rear side (specifically, obliquely leftward on the rear side). As a result, the retainer 51 including the upper coupling pin 73 inserted into a long hole 67a of the extending member 66 moves while swinging sideward (leftward). At this time, the retainer 51 moves without changing the inclination to the left or right from the position at the time of going straight as illustrated by the two-dotted chain line. For example, the rear wall 51b always moves in a state in which the rear wall 51b extends in the vehicle width direction.

In Figures 5 and 6 as described above, the retainer 51 moves on the opposite side of the steering direction of the handle 23 with steering of the handle 23 to the left or right in the airbag device 50. If an impact applied to the vehicle body is detected when the handle 23 is steered to the left or right (for example, when the vehicle is turned) in this manner, it is possible to cause the airbag to be deployed such that the airbag faces the driver who has moved on the opposite side of the steering direction due to a centrifugal force.

As illustrated in Figures 2 and 4 described above, the motorcycle 1 that is a saddle-type vehicle includes the inflator 53, the airbag 52 configured to expand by gas discharged from the inflator 53, and the retainer 51 accommodating the airbag 52.

In the airbag device 50, the retainer 51 is disposed behind the head pipe 14. The retainer 51 is coupled to the upper backward extending portion (first extending portion) 68 extending backward from the steering shaft 20 that is a steering shaft turnably supported by the head pipe 14 and the lower backward extending portion (second extending portion) 69 extending backward from the head pipe 14 or the steering shaft 20. Also, the retainer 51 moves to the left or right in response to steering of the handle 23.

With this configuration, it is possible to move the retainer 51 to the left or right in response to steering of the handle 23 and to cause the airbag 52 to be deployed such that the airbag 52 faces the passenger (driver) when the airbag 52 is deployed upward.

Also, as illustrated in Figure 4, the upper backward extending portion 68 has one end secured to the steering shaft 20 and the other end coupled to the retainer 51 in a swingable manner. The lower backward extending portion 69 includes the link member 71 that has one end coupled to the side of the head pipe 14 in a swingable manner and the other end coupled to the retainer 51 in a swingable manner.

With this configuration, it is possible to dispose the upper backward extending portion 68 and the lower backward extending portion 69 to be closer to the axial direction of the steering shaft 20 and to compactly form the airbag device 50.

Also, since the pair of link members 71 are provided as illustrated in Figure 3, it is possible to fixedly support the retainer 51 with the upper backward extending portion 68 and the pair of link members 71 of the lower backward extending portion 69.

In addition, since the link members 71 are the pair of parallel links, it is possible to move the retainer 51 in parallel to the left or right in response to steering of the handle 23 and to cause the airbag 52 to be deployed such that the airbag 52 faces the passenger when the airbag 52 is deployed upward.

### <Second not claimed embodiment>

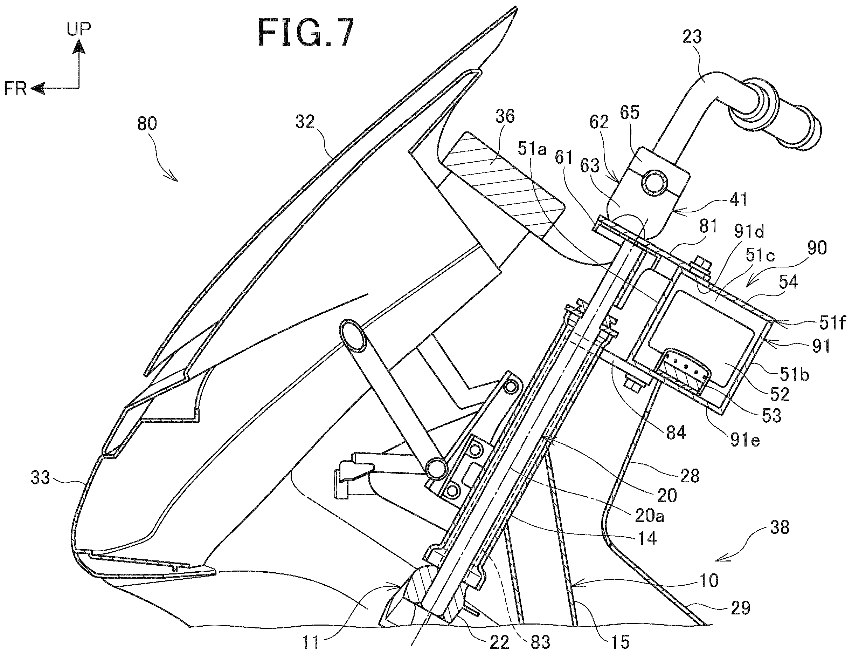

Figure 7 is a sectional view of a center of a vehicle body front portion of a motorcycle 80 in the vehicle width direction cut in the front-back direction according to a second embodiment.

In the second embodiment, the same reference signs will be applied to the same configurations as those in the first embodiment, and detailed description will be omitted.

An extending member 81 extending backward (specifically, obliquely downward on the rear side) is secured to a base member 61 of a handle holder 41. Also, an extending member 84 is secured to a bridge member 22 via a pair of left and right stays 83.

The left and right stays 83 extend upward (specifically, obliquely backward on the upper side) along a head pipe 14 on both sides of the head pipe 14 from both side portions of the bridge member 22.

The extending member 84 is secured to upper ends of the left and right stays 83 and extends backward (specifically, obliquely downward on the rear side) from the left and right stays 83.

A box-shaped retainer 91 configuring an airbag device 90 is supported by a rear end portion of the extending member 81 and a rear end portion of the extending member 84 described above.

The airbag device 90 includes a retainer 91 instead of the retainer 51 (see Figure 2) as compared with the airbag device 50 (see Figure 2) according to the first embodiment. In other words, the airbag device 90 includes a retainer 91 and an airbag 52 and an inflator 53 disposed inside the retainer 91.

The retainer 91 is disposed behind a head pipe 14 and a steering shaft 20.

The retainer 91 is made of metal and includes a front wall 51a, a rear wall 51b, a pair of left and right side walls 51c, an upper wall 91d, and a bottom wall 91e, and a cap member 54 is attached to an upper portion.

The cap member 54 blocks an opening 51f formed by the rear wall 51b, the left and right side walls 51c, and the upper wall 91d of the retainer 91.

The airbag 52 is attached to the inflator 53 and is accommodated in a folded state in the retainer 91.

The inflator 53 is secured to the bottom wall 91e of the retainer 91.

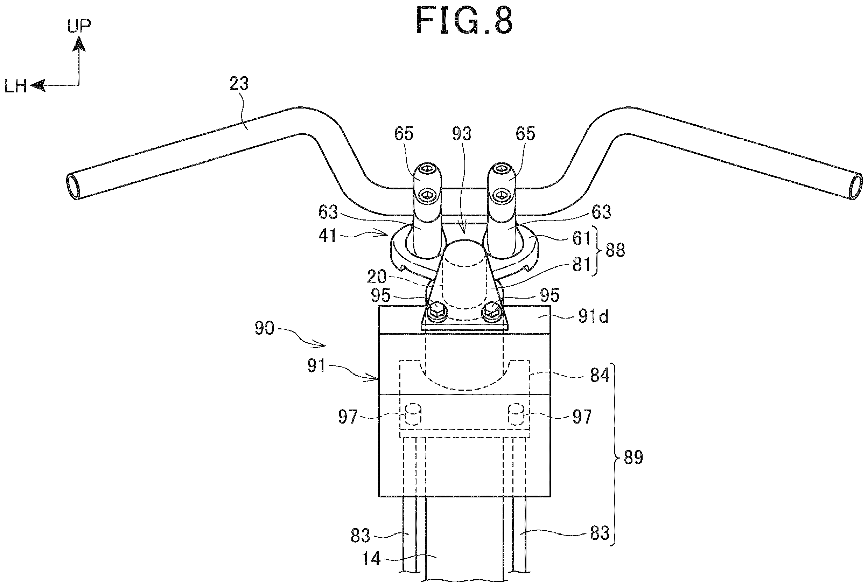

Figure 8 is a back view illustrating disposition and a structure of the airbag device 90 (second embodiment).

The airbag device 90 includes a retainer support portion 93 that supports the retainer 91.

The retainer support portion 93 includes a base member 61, an extending member 81, left and right stays 83, and an extending member 84. The base member 61 and the extending member 81 configure an upper backward extending portion 88. Also, the left and right stays 83 and the extending member 84 configure a lower backward extending portion 89. The upper backward extending portion 88 and the lower backward extending portion 89 are included in the airbag device 90.

The extending member 81 has a plate shape, a front end portion thereof is secured to the handle holder 41 (specifically, the base member 61) such that the front end portion extends backward, and a rear end portion thereof is secured to the upper wall 91d of the retainer 91 with a pair of left and right bolts 95.

The left and right stays 83 are formed straight into a plate shape or a rod shape. Lower end portions of the left and right stays 83 are joined through welding or are fastened with fastening members to left and right-side portions of the bridge member 22 (see Figure 7), respectively.

The extending member 84 has a plate shape, a front end portion thereof is joined through welding, for example, to the upper ends of the left and right stays 83, and a rear end portion thereof is secured to the bottom wall 91e (see Figure 7) of the retainer 91 with a pair of left and right bolts 97.

As described above, the retainer 91 is integrally supported on the side of the steering shaft 20 via the retainer support portion 93. Therefore, the retainer 91 moves to the left or right in response to steering when the handle 23 is steered to the left or right.

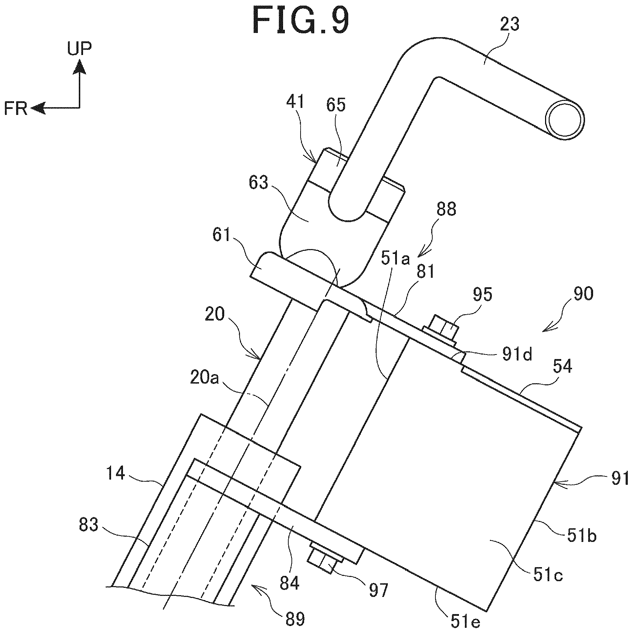

Figure 9 is a left side view illustrating the disposition and the structure of the airbag device 90 (second embodiment).

In a side view of the vehicle, the extending member 81 and the extending member 84 are disposed at a right angle or an angle close to the right angle with respect to an axial line 20a of the steering shaft 20.

Note that the extending member 81 may be secured directly to the steering shaft 20.

Since the retainer 91 is fastened to the extending member 81 and the extending member 84 with the bolts as described above, it is possible to fixedly secure the retainer 91.

Also, since each of the extending member 81 and the extending member 84 extends backward from the side of the steering shaft 20, it is possible to cause the retainer 91 to be located closer to the driver and to make it easy to receive the driver with the airbag 52 when the airbag 52 is deployed.

Actions of the airbag device 90 described above will be described below.

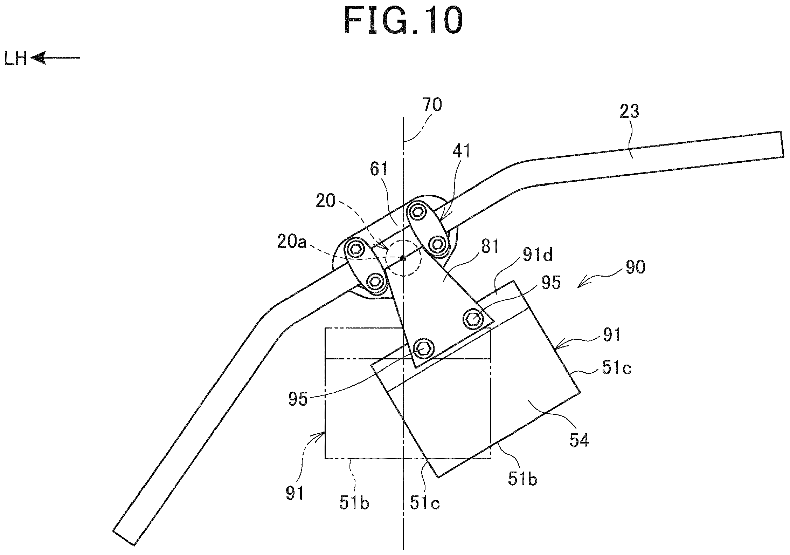

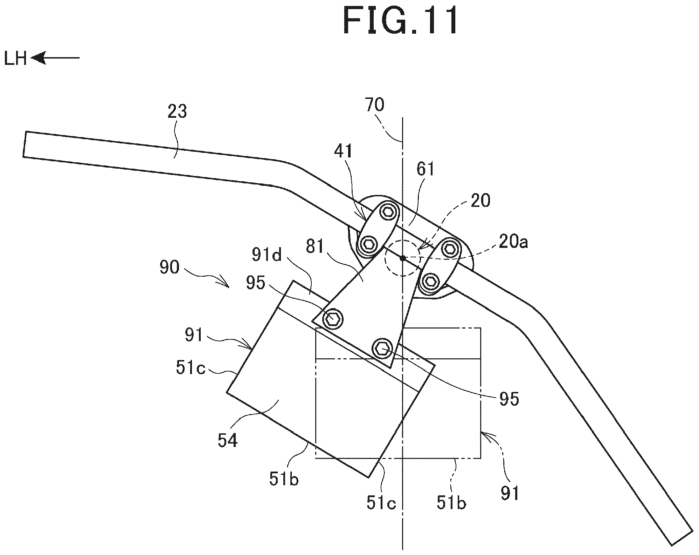

Figure 10 is a first action diagram illustrating actions of the airbag device 90 (second embodiment), and Figure 11 is a second action diagram illustrating actions of the airbag device 90 (second embodiment).

Figures 10 and 11 illustrate a state when seen from the upper side in the axial direction of the steering shaft 20.

As illustrated in Figure 10, if the handle 23 is turned left from the state at the time of going straight, then the extending member 81 and the extending member 84 (see Figure 9) swing from a state in which the extending member 81 and the extending member 84 extend backward with respect to the steering shaft 20 to a state in which the extending member 81 and the extending member 84 extend obliquely sideward on the rear side (obliquely rightward on the rear side). At this time, the retainer 91 attached to the rear end portion of each of the extending member 81 and the extending member 84 swings on one side (right side) from the position when the vehicle goes straight illustrated by the two-dotted chain line around the steering shaft 20 at the center. For example, the rear wall 51b moves from a state in which the rear wall 51b faces the rear side of the vehicle to a state in which the rear wall 51b faces obliquely backward on one side (obliquely backward on the right side).

As illustrated in Figure 11, if the handle 23 is turned right from the state at the time of going straight, then the extending member 81 and the extending member 84 (see Figure 9) swing from a state in which the extending member 81 and the extending member 84 extend backward with respect to the side of the steering shaft 20 to a state in which the extending member 81 and the extending member 84 extend obliquely sideward (obliquely leftward on the rear side). At this time, the retainer 91 swings on the other side (left side) from the position when the vehicle goes straight as illustrated by the two-dotted chain line around the steering shaft 20 at the center. For example, the rear wall 51b moves from a state in which the rear wall 51b faces the rear side of the vehicle to a state in which the rear wall 51b faces obliquely backward on the other side (obliquely backward on the left side).

In Figures 10 and 11 described above, the retainer 91 swings on the opposite side of the steering direction of the handle 23 with the steering of the handle 23 to the left or right in the airbag device 90. If an impact applied to the vehicle body is detected when the handle 23 is steered to the left or right (for example, when the vehicle is turned) in this manner, it is possible to cause the airbag to be deployed such that the airbag faces the driver who has moved on the opposite side of the turning direction due to a centrifugal force.

As illustrated in Figures 7 and 9 described above, the motorcycle 80 that is a saddle-type vehicle includes the inflator 53, the airbag 52 configured to expand by gas discharged from the inflator 53, and the retainer 91 accommodating the airbag 52.

In the airbag device 90, the retainer 91 is disposed behind the head pipe 14. The retainer 91 is coupled to an upper backward extending portion (first extending portion) 88 extending backward from the steering shaft 20 turnably supported by the head pipe 14 and a lower backward extending portion (second extending portion) 89 extending backward from the head pipe 14 or the steering shaft 20. Also, the retainer 91 moves to the left or right in response to steering of the handle 23.

With this configuration, it is possible to move the retainer 91 to the left or right in response to the steering of the handle 23 and to cause the airbag 52 to be deployed such that the airbag 52 faces the passenger when the airbag 52 is deployed upward.

Also, each of the upper backward extending portion 88 and the lower backward extending portion 89 has one end secured to the steering shaft 20 and the other end secured to the retainer 91.

With this configuration it is possible to move the retainer 91 to the left or right in response to steering of the handle 23 and to cause the airbag 52 to be deployed such that the airbag 52 faces the passenger when the airbag 52 is deployed upward with a simple structure.

Also, as illustrated in Figure 7, the lower backward extending portion 89 is attached to a front fork 11 that includes the steering shaft 20 and that supports a front wheel 2 that serves as a steering wheel.

With this configuration, it is possible to increase a degree of freedom in an attachment position of the lower backward extending portion 89 and to enhance versatility of the airbag device 90.

Although the left and right link members 71 are parallel to each other as illustrated in Figures 5 and 6 in the first embodiment, the present invention is not limited thereto. For example, an interval between rear ends of the left and right link members 71 may be wider than an interval of front ends thereof, or the interval between the rear ends thereof may be narrower than the interval between the front ends thereof. In this manner, it is possible to change the angle of the rear wall 51b of the retainer 51 with respect to the vehicle width direction. It is thus possible to adjust how wide the airbag 52 is to be transversely spread and a direction in which the rear surface of the airbag 52 is to face when the airbag 52 is deployed.

Moreover, although the retainer 91 is attached to the side of the front fork 11 with both the upper backward extending portion 88 and the lower backward extending portion 89 as illustrated in Figure 9, in a further not claimed embodiment the retainer 91 may be attached tc the side of the front fork 11 with either the upper backward extending portion 88 or the lower backward extending portion 89.

The present invention is not limited to the case in which the present invention is applied to the motorcycle 1 or 80 and can be applied to saddle-type vehicles including motorcycles other than the motorcycles 1 and 80. Note that the saddle-type vehicles generally include vehicles configured such that a passenger straddles the vehicle body to get on the vehicle and are vehicles including not only motorcycles (including motorized bicycles) but also three-wheel vehicles and four-wheel vehicles categorized into all-terrain vehicles (ATVs).

### [Reference Signs List]

1, 80 Motorcycle (saddle-type vehicle)
2 Front wheel (steering wheel)
11 Front fork
14 Head pipe
20 Steering shaft (steering shaft)
21 Fork pipe (steering wheel support member)
23 Handle
51, 91 Retainer
52 Airbag
53 Inflator
68, 88 Upper backward extending portion (first extending portion)
69, 89 Lower backward extending portion (second extending portion)
71 Link member

## Claims

1. A saddle-type vehicle comprising an airbag device that includes: an inflator (53); an airbag (52) configured to expand by gas discharged from the inflator (53); and a retainer (51, 91) accommodating the airbag (52),
wherein the retainer (51, 91) is disposed behind a head pipe (14), and wherein
the retainer (51, 91) is coupled to a first extending portion (68, 88) extending backward from a steering shaft (20) turnably supported by the head pipe (14) and a second extending portion (69, 89) extending backward from the head pipe (14) or the steering shaft (20), and the retainer (51, 91) moves to left or right in response to steering of a handle (23),
the first extending portion (68) has one end secured to the steering shaft (20) and the other end coupled to the retainer (51) in a swingable manner, **characterised in that**
the second extending portion (69) includes a link member (71) that has one end coupled to a side of the head pipe (14) in a swingable manner and the other end coupled to the retainer (51) in a swingable manner.

2. The saddle-type vehicle according to claim 1, wherein a pair of link members (71) are provided.

3. The saddle-type vehicle according to claim 2, wherein the link members (71) are a pair of parallel links.

## Patentansprüche

1. Sattelfahrzeug, welches eine Airbag-Vorrichtung aufweist, welche enthält: einen Inflator (53); einen Airbag (52), der konfiguriert ist, um sich durch von dem Inflator (53) abgegebenen Gas zu expandieren; sowie einen Halter (51, 91), der den Airbag (52) aufnimmt,
wobei der Halter (51, 91) hinter einem Kopfrohr (14) angeordnet ist und wobei
der Halter (51, 91) mit einem ersten Erstreckungsabschnitt (68, 88) verbunden ist, der sich von einer am Kopfrohr (14) drehbar gelagerten Lenkwelle (20) nach hinten erstreckt, sowie einem zweiten Erstreckungsabschnitt (69, 89), der sich von dem Kopfrohr (14) oder der Lenkwelle (20) nach hinten erstreckt, und sich der Halter (51, 91) in Antwort auf Lenken einer Lenkstange (23) nach links oder rechts bewegt,
der erste Erstreckungsabschnitt (68) ein Ende aufweist, das an der Lenkwelle (20) gesichert ist, sowie das andere Ende, das mit dem Halter (51) schwenkbar verbunden ist, **dadurch gekennzeichnet, dass**
der zweite Erstreckungsabschnitt (69) ein Verbindungselement (71) enthält, dessen eines Ende mit einer Seite des Kopfrohrs (14) schwenkbar verbunden ist und dessen anderes Ende mit dem Halter (51) schwenkbar verbunden ist.

2. Das Sattelfahrzeug nach Anspruch 1, wobei ein Paar von Verbindungselementen (71) vorgesehen ist.

3. Das Sattelfahrzeug nach Anspruch 2, wobei die Verbindungselemente (71) ein Paar von parallelen Verbindern ist.

## Revendications

1. Véhicule de type à selle comprenant un dispositif de coussin de sécurité gonflable qui comporte : un élément de gonflage (53) ; un coussin de sécurité gonflable (52) configuré pour se dilater par du gaz évacué de l'élément de gonflage (53) ; et un élément de retenue (51, 91) logeant le coussin de sécurité gonflable (52),
dans lequel l'élément de retenue (51, 91) est disposé derrière un tube de tête (14), et dans lequel
l'élément de retenue (51, 91) est accouplé à une première partie d'extension (68, 88) s'étendant vers l'arrière depuis un arbre de direction (20) supporté en rotation par le tube de tête (14) et une deuxième partie d'extension (69, 89) s'étendant vers l'arrière depuis le tube de tête (14) ou l'arbre de direction (20), et l'élément de retenue (51, 91) se déplace vers la gauche ou vers la droite en réponse à l'orientation d'un guidon (23),
la première partie d'extension (68) possède une extrémité fixée à l'arbre de direction (20) et l'autre extrémité accouplée à l'élément de retenue (51) d'une manière oscillante, **caractérisé en ce que**
la deuxième partie d'extension (69) comporte un organe de liaison (71) qui possède une extrémité accouplée à un côté du tube de tête (14) d'une manière oscillante et l'autre extrémité accouplée à l'élément de retenue (51) d'une manière oscillante.

2. Véhicule de type à selle selon la revendication 1, dans lequel une paire d'organes de liaison (71) sont prévus.

3. Véhicule de type à selle selon la revendication 2, dans lequel les organes de liaison (71) sont une paire de biellettes.
